# EUROPÄISCHE PATENTSCHRIFT

(11) **EP 1 888 382 B1**
(45) Veröffentlichungstag und Bekanntmachung des Hinweises auf die Patenterteilung: **17.12.2008**
(21) Anmeldenummer: 06841163.6
(22) Anmeldetag: 23.12.2006
(51) Int. Cl.: B60S 3/04

(54) **VERFAHREN UND VORRICHTUNG ZUR STEUERUNG EINER FAHRZEUGWASCHANLAGE**
METHOD AND APPARATUS FOR CONTROLLING A VEHICLE WASHING INSTALLATION
PROCEDE ET DISPOSITIF DE COMMANDE D'UNE INSTALLATION DE LAVAGE DE VEHICULES

(30) Priorität: 20.01.2006 DE 102006002794
(43) Veröffentlichungstag der Anmeldung: 20.02.2008
(73) Patentinhaber: WashTec Holding GmbH, 86153 Augsburg (DE)
(72) Erfinder: AUER, Robert, 86391 Stadtbergen (DE); MAYER, Stefan, 86356 Neusäss (DE)
(74) Vertreter: Charrier, Rapp & Liebau
(86) Internationale Anmeldenummer: PCT/EP2006/012528
(87) Internationale Veröffentlichungsnummer: WO 2007/087889

(56) Entgegenhaltungen:
- EP-A2- 0 283 446
- JP-A- 2002 211 366
- US-A1- 5 175 601
- US-B1- 6 709 530

## Beschreibung

Die Erfindung betrifft ein Verfahren zur Steuerung einer Fahrzeugwaschanlage, wie es aus der EP 0 283 446 A2 bekannt ist. Weiter betrifft die Erfindung eine Vorrichtung zur Steuerung einer Fahrzeugwaschanlage nach dem Oberbegriff des Anspruchs 6.

Bei Fahrzeugwaschanlagen besteht der Wunsch, die Oberflächenstruktur des zu waschenden Fahrzeugs möglichst gut zu erfassen, um Behandlungseinrichtungen wie die rotierenden Waschbürsten eines verfahrbaren Waschportals möglichst nahe an die Fahrzeugoberflächen heranführen zu können, ohne das Fahrzeug oder daran angebrachte Zubehörteile zu beschädigen.

Bei bekannten Fahrzeugwaschanlagen werden hierzu üblicherweise Lichtschranken verwendet, die seitlich oder oberhalb des Fahrzeugs an der Fahrzeugwaschanlage angebracht sind und die Höhenkontur des Fahrzeugs erfassen. So offenbaren beispielsweise die DE 32 08 527, die DE 35 44 390 oder die DE 202 04 586 eine vor der ersten Arbeitsstation der Waschanlage befindliche Abtasteinrichtung, die aus mehreren senkrecht übereinander oder matrixartig angeordneten Lichtschranken besteht und hierdurch die Höhenkontur des Fahrzeugs ermittelt. Bei der Portalwaschanlage der DE 38 25 346 ist eine aus senkrecht übereinander angeordneten Lichtschranken bestehende Höhenkontur-Erfassung vorgesehen, die direkt am verfahrenden Portal angeordnet ist. Zusätzlich ist dort an der vertikal verfahrbaren Trocknungsdüse eine Lichtschrankenanordnung angeordnet, die den Abstand der Trocknungsdüse vom Fahrzeugdach erfasst und steuert.

Die DE 44 17 864 offenbart ebenfalls eine Lichtschrankenanordnung, wobei dort nicht die Höhenkontur des Fahrzeugs erfasst wird, sondern zwei Lichtschranken vertikal und auf den Seiten des Fahrzeugs angeordnet sind, um die Seitenkontur des Fahrzeugs zu erfassen und die seitlichen Behandlungsaggregate anzusteuern.

Nachteilig bei diesen bekannten Vorrichtungen zur Konturerfassung und Steuerung von Fahrzeugwaschanlagen ist, dass jeweils nur die Höhenkontur an der jeweils höchsten Stelle bzw. die Seitenkontur an den am weitesten herausstehenden Stellen des Fahrzeugs ermittelt werden können, während die tatsächliche dreidimensionale Oberflächenstruktur des zu waschenden Fahrzeugs nicht erfasst werden kann.

Eine weiteren Höhenkonturmessung zeigt die DE 44 39 583. Dort sendet während der Relativbewegung zwischen Fahrzeug und Waschportal ein Ultraschallsender/-empfänger einen Ultraschallstrahl in Längsrichtung des Fahrzeugs auf die Fahrzeugoberfläche, der an manchen wenigen Stellen von der Fahrzeugoberfläche direkt zum Ultraschallsender/- empfänger hin zurückreflektiert wird. Für diese mehr oder weniger zufällig zurückreflektierten Strahlen wird die Laufzeit bestimmt und daraus ein Abbild der Höhenkontur der Fahrzeugoberfläche ermittelt. Nachteilig bei diesem Verfahren ist, dass auch dort die Fahrzeugkontur nur stellenweise ermittelt werden kann, wobei nicht ohne weiteres festgestellt werden kann, ob in dieser Höhenkontur die jeweils höchsten Stellen des Fahrzeugs enthalten sind.

Die EP 0 283 446 A2 offenbart ein Verfahren zur Steuerung einer Fahrzeugwaschanlage, wobei mindestens eine Behandlungseinrichtung und ein zu waschendes Fahrzeug in Waschrichtung relativ zueinander bewegt werden, die Fahrzeugoberflächen durch zwei von unterschiedlichen Positionen ausgehenden Lichtquellen beleuchtet werden, eine erste und eine zweite zweidimensionale Abbildung der von den Lichtquellen beleuchteten Fahrzeugoberflächen aus zu den Lichtfächerebenen schrägen Aufnahmewinkeln aufgenommen und mit der Relativposition und/oder Relativbewegung von Behandlungseinrichtungen und Fahrzeug in einer Steuereinheit gespeichert werden, die vorangegangenen Schritte während eines Überfahrvorgangs von einem Ende zum anderen Ende des Fahrzeugs wiederholt werden, und während oder nach dem Ende des Überfahrvorgangs aus den in der Steuereinheit gespeicherten zweidimensionalen Abbildungen, der Relativposition und/oder Relativbewegung und Positionsdaten der Lichtquellen eine dreidimensionale Darstellung der Fahrzeugoberflächen berechnet und zur Steuerung der Fahrzeugwaschanlage, insbesondere der daran angeordneten Behandlungseinrichtungen, verwendet wird.

Die dortige Waschanlage ist mit einer ersten und zweiten Lichtquelle und einer ersten und zweiten Bilderfassungseinheit, z.B. in Form von photoelektrischen Zellen, Ultraschallvorrichtungen, Laser oder TV-Kameras, versehen, die mit einer Steuereinheit verbunden sind, wobei mindestens eine Behandlungseinrichtung und ein zu waschendes Fahrzeug in Waschrichtung relativ zueinander bewegbar sind. Die dortigen Lichtquellen sind in einer Ebene und voneinander beabstandet ausgerichtet. Die Bilderfassungseinheiten sind zum Weiterleiten von zweidimensionalen Abbildungen an die Steuereinheit eingerichtet. Die Steuereinheit ist zur Speicherung der zweidimensionalen Abbildungen, der Positionsdaten der Lichtquellen und Bilderfassungseinheiten, der Relativposition und/oder Relativbewegung von Behandlungseinrichtungen und Fahrzeug sowie zur Berechnung einer dreidimensionalen Darstellung der Fahrzeugoberflächen aus den gespeicherten Daten und zur Ableitung von Steuersignalen daraus eingerichtet.

Aufgabe der vorliegenden Erfindung ist es, eine Vorrichtung und ein Verfahren zur Steuerung eine Fahrzeugwaschanlage der eingangs genannten Art bereitzustellen, welche die oben genannten Nachteile überwinden und eine sichere und gegen die ungünstigen äußeren Bedingungen unempfindliche Erfassung der dreidimensionalen Oberflächenstruktur eines Fahrzeugs in einer Fahrzeugwaschanlage und eine verbesserte Steuerung der Fahrzeugwaschanlage ermöglichen.

Diese Aufgabe wird durch ein Verfahren zur Steuerung eine Fahrzeugwaschanlage mit den Merkmalen des Anspruchs 1 und eine Vorrichtung zur Durchführung dieses Verfahrens mit den Merkmalen des Anspruchs 6 gelöst. Vorteilhafte Ausgestaltungen und zweckmäßige Weiterbildungen der Erfindung sind in den Unteransprüchen angegeben.

Eine besonderer Vorteil des erfindungsgemäßen Verfahrens und der erfindungsgemäßen Vorrichtung liegt darin, dass eine vollständige Erfassung der dreidimensionalen Oberflächenstruktur eines zu waschenden Fahrzeugs ermöglicht wird, wodurch die Behandlungseinrichtungen der Fahrzeugwaschanlage optimal an das Fahrzeug herangeführt werden können. Durch die Verwendung von zwei Laserlinienprojektoren-Kamera-Paaren können aus Hinterschneidungen resultierende "weiße", also unbekannte Bereiche der Oberflächenstruktur des Fahrzeugs, vermieden werden. Zur Berechnung der dreidimensionalen Oberflächenstruktur werden bevorzugt an sich bekannte Berechnungsverfahren wie das auf der Triangulationsrechnung basierende Lichtschnittverfahren oder Laserlichtschnittverfahren verwendet.

In einer besonders vorteilhaften Ausführung der Erfindung sind die Lichtquellen Laserlinienprojektoren, die statische Lichtfächer bzw. Laserfächer erzeugen. Die Bilderfassungseinheiten sind vorteilhaft lichtempfindliche Kameras mit elektronischer Bilderfassung, insbesondere CCD-Kameras. Besonders gute Aufnahmen der Projektionen der Lichtfächer auf die Fahrzeugoberflächen werden erzielt, wenn den Kameras auf die Wellenlänge der Sendestrahlen, insbesondere der Wellenlänge der Laserstrahlen, angepasste Filter vorgeschaltet sind.

Um die Bilderfassungseinheiten vor den ungünstigen, feuchten Umgebungsbedingungen in einer Fahrzeugwaschanlage zu schützen, sieht eine Ausführung die Anordnung der Lichtquelle und/oder Bilderfassungseinheiten in einem Schutzgehäuse vor.

Weitere Besonderheiten und Vorzüge der Erfindung ergeben sich aus der folgenden Beschreibung von bevorzugten Ausführungsbeispielen anhand der Zeichnungen. Es zeigen:
- **Fig. 1**: eine schematische Ansicht eines verfahrbaren Portals einer Portalwaschanlage mit einem zu waschenden Fahrzeug von der Seite;
- **Fig. 2**: eine schematische Ansicht des Portals aus Fig. 1 von vorne;
- **Fig. 3**: eine schematische perspektivische Ansicht des Portals aus Fig. 1;
- **Fig. 4**: eine schematische perspektivische Ansicht des Portals aus Fig. 1 ohne zu waschendes Fahrzeug;
- **Fig. 5**: ein funktionales Blockdiagramm der Steuerung der Waschanlage;

- **Fig. 6**: eine schematische perspektivische Ansicht des Portals aus Fig. 1 zur Erläuterung der Funktionsweise der Erfassung der dreidimensionalen Oberflächenstruktur eines Beispielgegenstands;
- **Fig. 7**: eine von einer ersten Kamera erfasste erste zweidimensionalen Abbildung der dreidimensionalen Oberflächenstruktur des Beispielgegenstands aus Fig. 6;
- **Fig. 8**: eine von einer zweiten Kamera erfasste zweite zweidimensionalen Abbildung der dreidimensionalen Oberflächenstruktur des Beispielgegenstands aus Fig. 6.

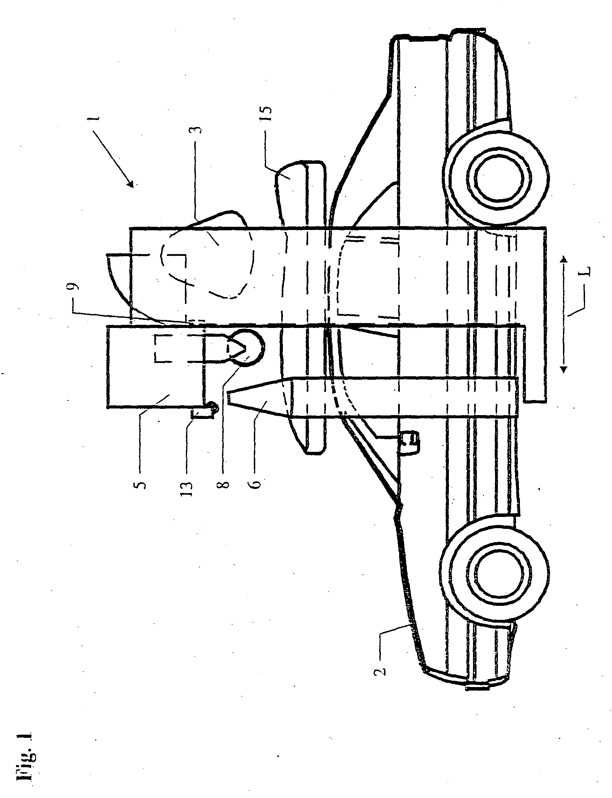

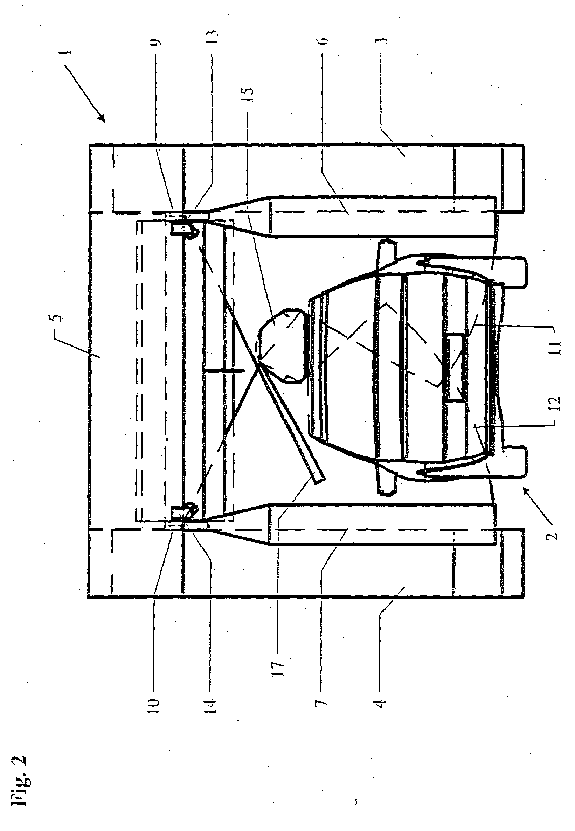

Die Fig. 1 und 2 zeigen eine schematische Ansicht einer an sich bekannten Portalwaschanlage mit einer als Waschportal 1 ausgebildeten Behandlungseinrichtung und einem eingestelltem zu waschenden Fahrzeug 2. Das Waschportal 1 weist zwei vertikale, in Wasch- bzw. Längsrichtung L des Fahrzeugs 2 verfahrbare Portalsäulen 3 und 4 und eine quer zur Längsrichtung L verlaufenden Traverse 5 auf, welche die Portalsäulen 3 und 4 verbindet. An der Traverse 5 sind um senkrecht Achsen drehbare Waschbürsten 6 und 7 angeordnet, die zum Waschen der Seitenflächen und der Vorder- und Rückseite des Fahrzeugs 2 an der Traverse 5 quer zur Längsrichtung L bewegbar sind. Eine horizontal über dem Fahrzeugdach verlaufende Waschbürste 8 ist in den Zeichnungen nur angedeutet. Ebenso kann die Erfindung aber auch bei Fahrzeugwaschanlagen mit Hochdruckreinigungsvorrichtungen eingesetzt werden.

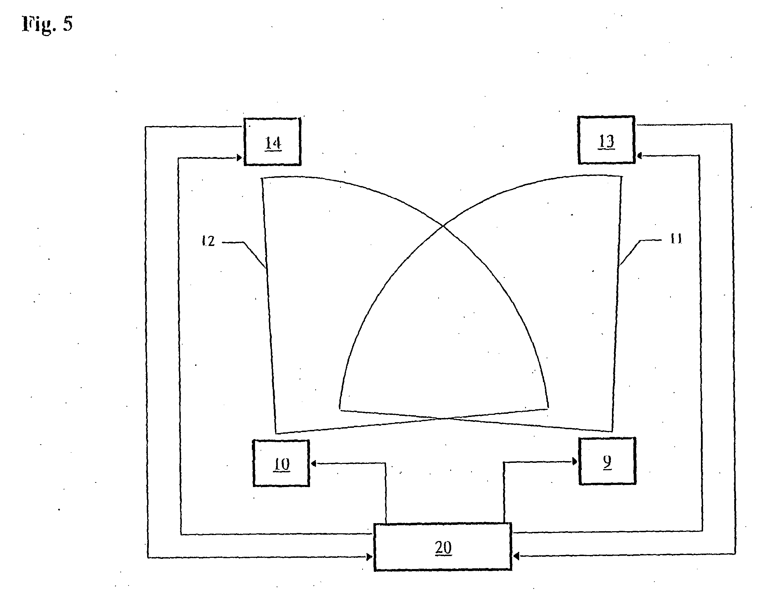

Um die dreidimensionale Oberflächenstruktur bzw. den Verlauf der Fahrzeugoberflächen des Fahrzeugs 2 ermitteln zu können, sind an der in Fig. 1 rechten unteren Kante der Traverse 5 und auf der Innenseiten der Portalsäulen 3 und 4 zwei als Lichtquellen dienende Laserlinienprojektoren 9 und 10 angebracht. Die Laserlinienprojektoren 9 und 10 enthalten je einen Laser und eine angepasste Optik, die den Laserstrahl zu einem statischen Lichtfächer 11 bzw. 12 aufweitet. Die Lichtfächer 11 und 12 können anstatt durch eine Optik auch dadurch erzeugt werden, dass in der Lichtfächerebene schnell rotierende oder sich schnell hin- und herbewegende Laser mit punktförmigen Laserstrahlen verwendet werden, so dass nichtstatische Lichtfächer entstehen. Die in den Zeichnungen schematisch dargestellten Lichtfächer 11 bzw. 12 verlaufen in einer Ebene senkrecht zur Längsrichtung L des Fahrzeugs 2 und beleuchten die nach oben gewandten und die seitlichen Fahrzeugoberflächen. Die Laserlinienprojektoren 9 und 10 werden von einer in Fig. 5 dargestellten Steuereinheit 20 der Fahrzeugwaschanlage angesteuert.

Um die von den Lichtfächern 11 bzw. 12 auf den Fahrzeugoberflächen erzeugten Lichtlinien erfassen zu können, sind an der in Fig. 1 linken Unterkante an den seitlichen Enden der Traverse 5 zwei als Bilderfassungseinheiten dienende CCD-Kameras 13 und 14 angeordnet. Die Kameras 13 und 14 sind so weit außen an der Traverse 5 angeordnet, dass sie jeweils eine der Fahrzeugseitenflächen und die im wesentlichen senkrechten und nach oben weisenden Fahrzeugflächen wie Fahrzeugfront, Front- und Heckwindschutzscheiben, Dach etc., erfassen können. Zusätzlich weisen die Kameras 13 und 14 auf die Wellenlänge der Laser angepasste Filter auf, so dass störende äußere Lichteinflüsse, beispielsweise Tageslicht oder Streulicht von künstlicher Beleuchtung, weitgehendst unterdrückt werden können. Auch die Kameras 13 und 14 werden von der Steuereinheit 20 angesteuert und ausgelesen.

Um die Oberflächenstruktur des Fahrzeugs 2, insbesondere auch die Struktur der Seitenflächen, zuverlässig erfassen zu können, werden beide Laserlinienprojektoren-Kamera-Paare 9, 13 bzw. 10,14 benötigt. Denn durch hervorstehende Fahrzeugteile wie Taxischilder, Außenspiegel, Dachträger oder Dachboxen 15 können Bereiche entstehen, sog. Hinterschneidungen, die von nur einer Kamera nicht mehr eingesehen werden können, so dass hierfür keine Abbildungen und somit Informationen über die Oberflächenstruktur erfasst werden können. Durch die Verwendung zweier Laserlinienprojektoren-Kamera-Paare 9, 13 und 10, 14 wird sichergestellt, dass alle wesentlichen Oberflächenstrukturen mindestens von einem Lichtfächer 11 oder 12 angestrahlt und von mindestens einer Kamera 13 oder 14 erfasst werden können.

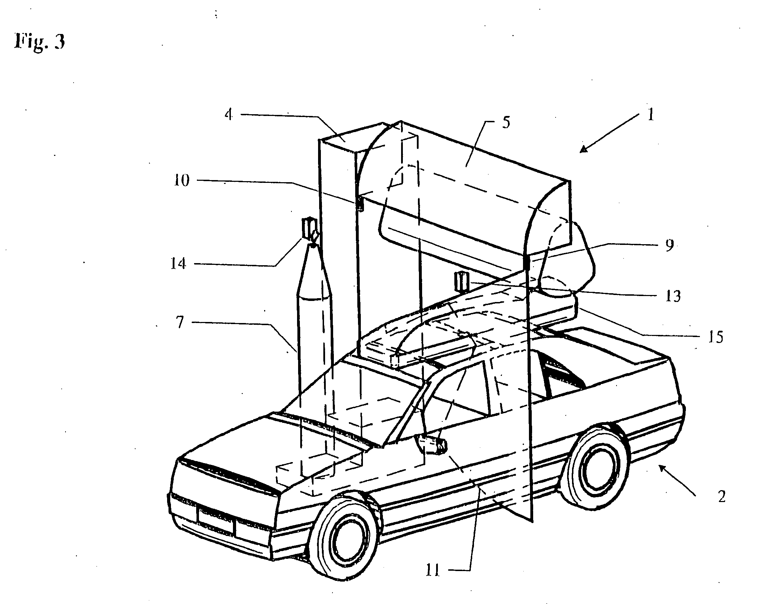

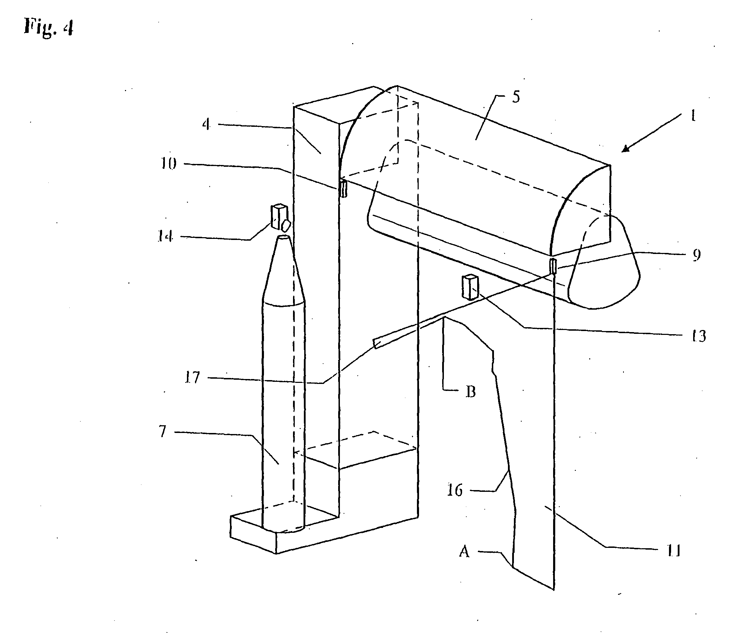

Ein Beispiel für eine vom Lichtfächer 11 auf der Fahrzeugoberfläche erzeugte Lichtlinie zeigt Fig. 4. Wie bei einem Vergleich mit Fig. 2 und 3 leicht festgestellt werden kann, erzeugt der Lichtfächer 11 auf der in Fig. 4 nicht gezeigten Fahrzeugoberfläche die Lichtlinie 16, welche von der Kamera 13 von den Punkten A bis B aufgenommen werden kann. Die Kamera 14 hingegen "sieht" von der Lichtlinie 16 lediglich den kurzen waagrechten Teil rechts von B, während der weitere Verlauf der Lichtlinie 16 nach A hin für die Kamera 14 von der in den Zeichnungen rechten Fahrzeugseite verdeckt wird. Andererseits kann die Kamera 13 den Bereich links von B neben der Dachbox 1 nicht einsehen, so dass die Oberflächenstruktur dort nur durch die Kamera 14 aufgenommen werden kann. Hier erzeugt lediglich der linke Lichtfächer 12 eine Lichtlinie auf der Fahrzeugoberfläche, denn der Lichtfächerstrahl 17 des rechten Lichtfächers 11 trifft die Fahrzeugoberfläche nicht, so dass er dort auch keinen Lichtschnitt erzeugt.

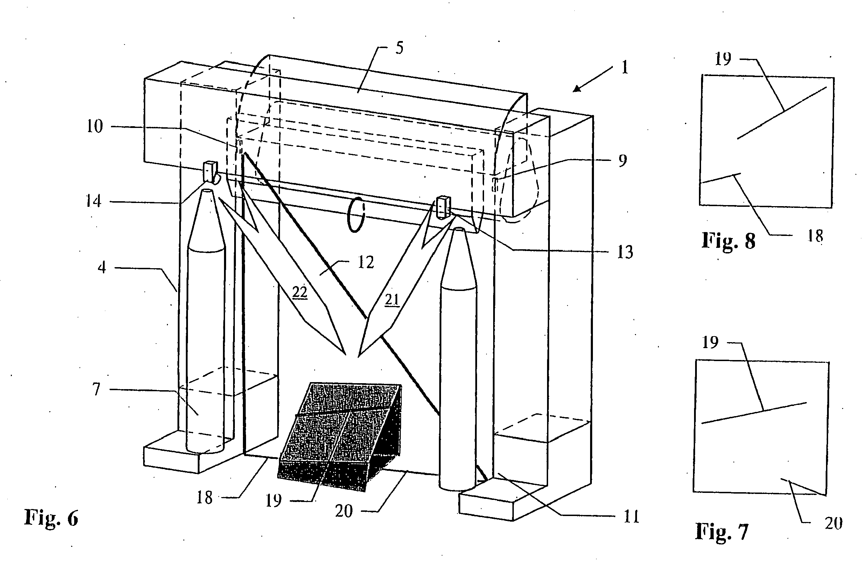

Ein Beispiel für die von der ersten Kamera 13 erfasste erste zweidimensionale Abbildung von auf den Waschanlagenboden bzw. eine Fahrzeugoberfläche - beispielhaft durch einen einfachen geometrischen Beispielgegenstand dargestellt - projizierten Lichtlinien 18, 19 und 20 des Lichtfächers 12 nach Fig. 6 zeigt Fig. 7, während Fig. 8 die von der zweiten Kamera 14 erfasste zweite zweidimensionale Abbildung derselben Lichtlinie 18 zeigt. Die Blickrichtungen der beiden Kameras 13 und 14 sind durch die Pfeile 21 und 22 angedeutet.

Im folgenden wird nun der Vorgang einer vollständigen Ermittlung der dreidimensionalen Oberflächenstruktur des Fahrzeugs erläutert.

Die Steuereinheit 20 lässt das Waschportal 1 von vorne an das zu waschende Fahrzeug 2 heranfahren und beginnt dann, in bestimmten Abtastschritten mit beiden Kameras 13 und 14 jeweils eine zweidimensionale Abbildung des Fahrzeugs 2 mit Beleuchtung durch die Lichtfächer 11 und 12 und eine Abbildung ohne Beleuchtung zu erfassen und in einem Speichermodul der Steuereinheit 20 aufzuzeichnen. Zudem zeichnet die Steuereinheit 20 die zu jedem Schritt gehörige Längsposition des Waschportals 1 sowie die Fahrgeschwindigkeit auf, welche der Relativposition bzw. -bewegung von Waschportal 1 zu Fahrzeug 2 entsprechen. Diese schrittweise Erfassung wird fortgesetzt, bis das Waschportal 1 nach einem Überfahrvorgang über das Fahrzeug 1 an dessen Ende angekommen ist. Ebenso ist es bei Verwendung der Erfindung in einer Durchfahrwaschanlage möglich, dass der Überfahrvorgang dadurch erfolgt, dass das Fahrzeug 2 an örtlich feststehenden Kameras und Laserlinienprojektoren vorbeifährt.

Um die auf den zweidimensionalen Abbildungen der Kameras projizierten Lichtlinien der Lichtfächer 11 und 12 für die weitere Verarbeitung aufzubereiten, werden die beleuchtete und die unbeleuchtete Abbildung einer Kamera 13 bzw. 14 eines Abtastschritts voneinander digital subtrahiert oder dividiert, so dass im wesentlichen die Lage der projizierten Lichtlinien auf der zweidimensionalen Abbildung verbleiben, während die restlichen abgebildeten Teile des Fahrzeugs oder der Fahrzeugwaschanlage herausgerechnet werden. Sofern die auf die Wellenlänge der Laser angepassten Filter die störenden äußeren Lichteinflüsse ausreichend unterdrücken, kann diese grafische Aufbereitung auch weggelassen werden. Dies kann für jeden Abtastschritt bereits während des Vorfahrens des Waschportals 1 oder auch am Ende des vollständigen Überfahrvorgangs erfolgen.

Liegen dann alle aufbereiteten Aufnahmen vor, so wird durch Verwendung des an sich bekannten Lichtschnitt-Berechnungsverfahren, wie beispielsweise in der DE 42 08 455, der DE 103 12 696 oder der DE 698 11 667 offenbart, unter zu Hilfenahme der Triangulationsrechnung aus den aufgezeichneten Abbildungen, Positions- und/oder Bewegungsdaten sowie den in der Steuereinheit 20 abgelegten Positionsdaten der Kameras 13 bzw. 14 und der Laserlinienprojektoren 9 bzw. 10 und des hieraus bekannten Aufnahmewinkels der Lichtfächer 11 bzw. 12 zu den Kameras 13 bzw. 14 die dreidimensionalen Daten der Oberflächenstruktur des Fahrzeugs 1 errechnet und zu einem dreidimensionalen Modell der nach oben und seitlich gewandten Fahrzeugoberflächen kombiniert. Alternativ kann das dreidimensionale Modell auch schon während der Aufzeichnung der einzelnen zweidimensionalen Abbildungen während jedes Abtastschritts erfolgen, so dass das dreidimensionale Modell schrittweise erzeugt wird.

Anschließend wird dann das in der Steuereinheit 20 abgelegte dreidimensionalen Modell der Fahrzeugoberflächen zur optimalen Steuerung der Behandlungseinrichtungen während des gesamten Wasch- oder Behandlungsprozesses verwendet, um beispielsweise die rotierenden Waschbürsten 6, 7 und 8 optimal den Fahrzeugoberflächen nachführen zu können.

Die Erfindung ist nicht auf die hier gezeigten Ausführungen beschränkt. So kann die Erfassung der dreidimensionalen Oberflächenstruktur in ähnlicher Weise auch bei einer Durchfahrwaschanlagen erfasst werden, wobei die Erfassung dann vorteilhaft während des Einfahrens des Fahrzeugs in die Fahrzeugwaschanlage erfolgt.

Auch kann statt zweier Laser-Kamera-Paare nur eines verwendet werden, wobei dann die Kamera quer zur Waschrichtung verfahrbar an der Traverse angeordnet ist, um die erste und zweite zweidimensionale Abbildung der dreidimensionalen Fahrzeugoberfläche aufnehmen zu können.

## Patentansprüche

1. Verfahren zur Steuerung einer Fahrzeugwaschanlage unter Verwendung eines Lichtschnittverfahrens, wobei mindestens eine Behandlungseinrichtung (1) und ein zu waschendes Fahrzeug (2) in Waschrichtung (L) relativ zueinander bewegt werden, die Fahrzeugoberflächen durch zwei von unterschiedlichen Positionen ausgehenden Lichtfächern (11, 12) beleuchtet werden, eine erste (Fig. 7) und eine zweite (Fig. 8) zweidimensionale Abbildung der von den Lichtfächern (11, 12) beleuchteten Fahrzeugoberflächen aus zu den Lichtfächerebenen schrägen Aufnahmewinkeln aufgenommen und mit der Relativposition und/oder Relativbewegung von Behandlungseinrichtungen (1) und Fahrzeug (2) in einer Steuereinheit (20) gespeichert werden, die vorangegangenen Schritte während eines Überfahrvorgangs von einem Ende zum anderen Ende des Fahrzeugs (2) wiederholt werden, und während oder nach dem Ende des Überfahrvorgangs aus den in der Steuereinheit (20) gespeicherten zweidimensionalen Abbildungen, den Aufnahmewinkeln, der Relativposition und/oder Relativbewegung und Positionsdaten der Lichtfächer (11, 12) eine dreidimensionale Darstellung der Fahrzeugoberflächen berechnet und zur Steuerung der Fahrzeugwaschanlage, insbesondere der daran angeordneten Behandlungseinrichtungen (1), verwendet wird.

2. Verfahren nach Anspruch 1, **dadurch gekennzeichnet, dass** die zweidimensionalen Abbildungen aus zueinander versetzten Positionen aufgenommen werden.

3. Verfahren nach Anspruch 1 oder 2, **dadurch gekennzeichnet, dass** die zweidimensionalen Abbildungen während der Relativbewegung von Behandlungseinrichtung (1) und Fahrzeug (2) diskontinuierlich aufgenommen werden.

4. Verfahren nach einem der vorangehenden Ansprüche, **dadurch gekennzeichnet, dass** zur Berechnung der dreidimensionalen Darstellung des Fahrzeugs (2) während eines Überfahrvorgangs ein kompletter Satz zweidimensionaler Abbildungen aufgenommen wird.

5. Verfahren nach einem der vorangehenden Ansprüche, **dadurch gekennzeichnet, dass** zu jeder der zweidimensionalen Abbildungen der von den Lichtfächern (11, 12) beleuchteten Fahrzeugoberflächen jeweils eine korrespondierende zweidimensionale Abbildung ohne Beleuchtung mit den Lichtfächern (11, 12) aufgenommen wird, die korrespondierenden beleuchteten und unbeleuchteten Abbildungen voneinander subtrahiert und/oder dividiert werden und die sich daraus ergebende zweidimensionale Abbildung für die Berechnung der dreidimensionalen Darstellung der Fahrzeugoberflächen verwendet wird.

6. Vorrichtung zur Durchführung eines Verfahrens nach einem der vorangehenden Ansprüche mit einer ersten und zweiten Lichtquelle (9, 10) und einer ersten und zweiten Bilderfassungseinheit (13, 14), die mit einer Steuereinheit (20) verbunden sind, wobei mindestens eine Behandlungseinrichtung (1) und ein zu waschendes Fahrzeug in Waschrichtung (L) relativ zueinander bewegbar sind, **dadurch gekennzeichnet, dass** die Lichtquellen (9, 10) zur Erzeugung der Lichtfächer (11, 12) in einer Ebene und voneinander beabstandet ausgerichtet sind, die Bilderfassungseinheiten (13, 14) zur Aufnahme einer ersten und einer zweiten zweidimensionalen Abbildung der von den Lichtfächern (11, 12) beleuchteten Fahrzeugoberflächen in zu den Lichtfächerebenen schrägen Aufnahmewinkeln angeordnet und zum Weiterleiten der zweidimensionalen Abbildungen an die Steuereinheit (20) eingerichtet sind, die Steuereinheit (20) zur Speicherung der zweidimensionalen Abbildungen , der Positionsdaten der Lichtquellen (11, 12) und Bilderfassungseinheiten (13, 14), der Relativposition und/oder Relativbewegung von Behandlungseinrichtungen (1) und Fahrzeug (2), zur Berechnung einer dreidimensionalen Darstellung der Fahrzeugoberflächen aus den gespeicherten Daten und zur Ableitung von Steuersignalen daraus eingerichtet ist.

7. Vorrichtung nach Anspruch 6, **dadurch gekennzeichnet, dass** die Lichtquellen (9, 10) und/oder die Bilderfassungseinheiten (13, 14) in einem Schutzgehäuse angeordnet sind.

8. Vorrichtung nach Anspruch 6 oder 7, **dadurch gekennzeichnet, dass** die Bilderfassungseinheiten (13, 14) in Waschrichtung (L) versetzt zu den Lichtquellen (9, 10) angeordnet sind.

9. Vorrichtung nach einem der Ansprüche 6 bis 8, **dadurch gekennzeichnet, dass** die Lichtquellen (9, 10) und die Bilderfassungseinheiten (13, 14) an einer Traverse (5) eines verfahrbaren Waschportals (1) der Fahrzeugwaschanlage angeordnet sind.

10. Vorrichtung nach Anspruch 9, **dadurch gekennzeichnet, dass** die erste Lichtquelle (9) und die erste Bilderfassungseinheit (13) am einen seitlichen Ende und die zweite Lichtquelle (10) und die zweite Bilderfassungseinheit (14) am anderen seitlichen Ende der Traverse (5) angeordnet sind.

11. Vorrichtung nach einem der Ansprüche 6 bis 10, **dadurch gekennzeichnet, dass** die Lichtquellen Laserstrahlen emittierende Laserlinienprojektoren (9, 10) sind.

12. Vorrichtung nach Anspruch 11, **dadurch gekennzeichnet, dass** die Laserlinienprojektoren (9, 10) Vorrichtungen zum Aufweiten der Laserstrahlen zu statischen Lichtfächern (11, 12) enthalten.

13. Vorrichtung nach Anspruch 11, **dadurch gekennzeichnet, dass** die Laserlinienprojektoren (9, 10) in der Ebene der Lichtfächer (11, 12) bewegbare Laser zur Erzeugung nichtstatischer Lichtfächer (11, 12) enthalten.

14. Vorrichtung nach einem der Ansprüche 6 bis 13, **dadurch gekennzeichnet, dass** die Bilderfassungseinheiten lichtempfindliche Kameras (13, 14) mit elektronischer Bilderfassung, insbesondere CCD-Kameras, sind.

15. Vorrichtung nach Anspruch 14, **dadurch gekennzeichnet, dass** den Kameras (13, 14) auf die Wellenlänge der Lichtfächer (11, 12), insbesondere die Wellenlänge der Laserstrahlen, angepasste Filter vorgeschaltet sind.

## Claims

1. Method for controlling a vehicle washing installation using a light intersection process, in which at least one treatment device (1) and a vehicle (2) to be washed are moved relative to one another in the washing direction (L), the vehicle surfaces are illuminated by two light fans (11, 12) emanating from different positions, a first two-dimensional picture (fig. 7) and a second two-dimensional picture (fig. 8) of the vehicle surfaces illuminated by the light fans (11, 12) are recorded from recording angles at an oblique angle to the light fan planes and stored with the relative position and/or relative movement of treatment devices (1) and vehicle (2) in a control unit (20), the preceding steps are repeated during a traversing operation from one end to the other end of the vehicle (2), and during or after the end of the traversing operation a three-dimensional illustration of the surfaces of the vehicle is calculated from the two-dimensional pictures stored in the control unit (20), the recording angles, the relative position and/or relative movement and position data of the light fans (11, 12) and used to control the vehicle washing installation, in particular the treatment devices (1) arranged in it.

2. Method according to claim 1, **characterised in that** the two-dimensional pictures are recorded from positions which are offset in relation to one another.

3. Method according to claim 1 or 2, **characterised in that** the two-dimensional pictures are recorded discontinuously during the relative movement of treatment device (1) and vehicle (2).

4. Method according to one of the preceding claims, **characterised in that** a complete set of two-dimensional pictures is recorded for calculating the three-dimensional illustration of the vehicle (2) during a traversing operation.

5. Method according to one of the preceding claims, **characterised in that** for each of the two-dimensional pictures of the vehicle surfaces illuminated by the light fans (11, 12) a corresponding two-dimensional picture is recorded without illumination with the light fans (11, 12), the corresponding illuminated and unilluminated pictures are subtracted from one another and/or divided and the resulting two-dimensional picture is used for the calculation of the three-dimensional illustration of the vehicle surfaces.

6. Device for implementing a method according to one of the preceding claims with a first and a second light source (9, 10) and a first and a second image detection unit (13, 14) which are connected to a control unit (20), wherein at least one treatment device (1) and a vehicle to be washed can be moved relative to one another in the washing direction (L), **characterised in that** the light sources (9, 10) are aligned in a plane and a distance from one another to produce the light fans (11, 12), the image detection units (13, 14) for recording a first and a second two-dimensional picture of the vehicle surfaces illuminated by the light fans (11, 12) are arranged at recording angles at an oblique angle to the light fan planes and set up to transmit the two-dimensional pictures to the control unit (20), the control unit (20) is set up to store the two-dimensional pictures, the position data of the light sources (11, 12) and image detection units (13, 14), the relative position and/or relative movement of treatment devices (1) and vehicle (2), to calculate a three-dimensional illustration of the vehicle surfaces from the stored data and to derive control signals therefrom.

7. Device according to claim 6, **characterised in that** the light sources (9, 10) and/or the image detection units (13, 14) are arranged in a protective housing.

8. Device according to claim 6 or 7, **characterised in that** the image detection units (13, 14) are arranged offset in relation to the light sources (9, 10) in the washing direction (L).

9. Device according to one of claims 6 to 8, **characterised in that** the light sources (9, 10) and the image detection units (13, 14) are arranged on a crossmember (5) of a moveable washing portal (1) of the vehicle washing installation.

10. Device according to claim 9, **characterised in that** the first light source (9) and the first image detection unit (13) are arranged at one side end and the second light source (10) and the second image detection unit (14) are arranged at the other side end of the crossmember (5).

11. Device according to one of claims 6 to 10, **characterised in that** the light sources are laser line projectors (9, 10) emitting laser beams.

12. Device according to claim 11, **characterised in that** the laser line projectors (9, 10) comprise devices for widening the laser beams to form static light fans (11, 12).

13. Device according to claim 11, **characterised in that** the laser line projectors (9, 10) comprise lasers moveable in the plane of the light fans (11, 12) to produce non-static light fans (11, 12).

14. Device according to one of claims 6 to 13, **characterised in that** the image detection units are light-sensitive cameras (13, 14) with electronic image detection, in particular CCD cameras.

15. Device according to claim 14, **characterised in that** filters matching the wavelength of the light fans (11, 12), in particular the wavelength of the light beams, are arranged in front of the cameras (13, 14).

## Revendications

1. Procédé de commande d'une installation de lavage de véhicule en utilisant un procédé de coupe optique, au moins un dispositif de traitement (1) et un véhicule (2) à laver étant déplacés l'un par rapport à l'autre dans le sens de lavage (L), les surfaces de véhicule étant éclairées par deux éventails lumineux (11, 12) sortant de différentes positions, une première (figure 7) et une seconde (figure 8) reproductions bidimensionnelles des surfaces de véhicule éclairées par les éventails lumineux (11, 12) étant enregistrées à partir des angles de prise de vue obliques par rapport au plan des éventails lumineux et étant mémorisées avec la position relative et/ou le mouvement relatif de dispositifs de traitement (1) et de véhicule (2) dans une unité de commande (20), les étapes précédentes étant répétées pendant un processus de passage d'une extrémité à l'autre du véhicule (2), et pendant ou à la fin du processus de passage, une représentation en trois dimensions des surfaces du véhicule étant calculée à partir des reproductions bidimensionnelles enregistrées dans l'unité de commande (20), des angles de prise de vue, de la position relative et/ou du mouvement relatif et des données de position des éventails lumineux (11, 12) et étant utilisée pour la commande de l'installation de lavage de véhicule, en particulier des dispositifs de traitement (1) disposés dessus.

2. Procédé selon la revendication 1, **caractérisé en ce que** les reproductions bidimensionnelles sont enregistrées à partir de positions décalées les unes par rapport aux autres.

3. Procédé selon la revendication 1 ou 2, **caractérisé en ce que** les reproductions bidimensionnelles sont enregistrées en discontinu pendant le mouvement relatif du dispositif de traitement (1) et du véhicule (2).

4. Procédé selon l'une quelconque des revendications précédentes, **caractérisé en ce qu'**un ensemble complet de reproductions bidimensionnelles est enregistré pour le calcul de la représentation en trois dimensions du véhicule (2) pendant un processus de passage.

5. Procédé selon l'une quelconque des revendications précédentes, **caractérisé en ce que** pour chacune des reproductions bidimensionnelles des surfaces de véhicule éclairées par les éventails lumineux (11, 12), respectivement une reproduction bidimensionnelle correspondante est enregistrée sans éclairage des éventails lumineux (11, 12), les reproductions éclairées et non éclairées correspondantes sont soustraites et/ou divisées les unes par les autres et la reproduction bidimensionnelle en résultant est utilisée pour le calcul de la représentation en trois dimensions des surfaces de véhicule.

6. Dispositif de réalisation d'un procédé selon l'une quelconque des revendications précédentes avec une première et une seconde source de lumière (9, 10) et une première et une seconde unité d'enregistrement d'images (13, 14) qui sont reliées à une unité de commande (20), au moins un dispositif de traitement (1) et un véhicule à laver pouvant être déplacés l'un par rapport à l'autre dans le sens de lavage (L), **caractérisé en ce que** les sources de lumière (9, 10) sont alignées dans un plan et à distance l'une de l'autre pour générer les éventails lumineux (11, 12), les unités d'enregistrement d'images (13, 14) sont disposées pour l'enregistrement d'une première et d'une seconde reproductions bidimensionnelles des surfaces de véhicule éclairées par les éventails lumineux (11, 12) dans les angles de prise de vue obliques par rapport aux plans des éventails lumineux et sont configurées pour la transmission des reproductions bidimensionnelles à l'unité de commande (20), l'unité de commande (20) est configurée pour mémoriser les reproductions bidimensionnelles, les données de position des sources de lumière (11, 12) et des unités d'enregistrement d'images (13, 14), la position relative et/ou le mouvement relatif des dispositifs de traitement (1) et du véhicule (2), pour calculer une représentation en trois dimensions des surfaces de véhicule à partir des données mémorisées et pour en dériver les signaux de commande.

7. Dispositif selon la revendication 6, **caractérisé en ce que** les sources de lumière (9, 10) et/ou les unités d'enregistrement d'images (13, 14) sont disposées dans un boîtier de protection.

8. Dispositif selon la revendication 6 ou 7, **caractérisé en ce que** les unités d'enregistrement d'images (13, 14) sont disposées décalées dans le sens de lavage (L) par rapport aux sources de lumière (9, 10).

9. Dispositif selon l'une quelconque des revendications 6 à 8, **caractérisé en ce que** les sources de lumière (9, 10) et les unités d'enregistrement d'images (13, 14) sont disposées sur une traverse (5) d'un portique de lavage (1) mobile de l'installation de lavage de véhicule.

10. Dispositif selon la revendication 9, **caractérisé en ce que** la première source de lumière (9) et la première unité d'enregistrement d'images (13) sont disposées au niveau d'une extrémité latérale et la seconde source de lumière (10) et la seconde unité d'enregistrement d'images (14) sont disposées au niveau de l'autre extrémité latérale de la traverse (5).

11. Dispositif selon l'une quelconque des revendications 6 à 10, **caractérisé en ce que** les sources de lumière sont des projecteurs de raie laser (9, 10) émettant des rayons laser.

12. Dispositif selon la revendication 11, **caractérisé en ce que** les projecteurs de raie laser (9, 10) contiennent des dispositifs pour étirer les rayons laser aux éventails lumineux (11, 12) statiques.

13. Dispositif selon la revendication 11, **caractérisé en ce que** les projecteurs de raie laser (9, 10) contiennent des lasers mobiles dans le plan des éventails lumineux (11, 12) pour générer des éventails lumineux (11, 12) non statiques.

14. Dispositif selon l'une quelconque des revendications 6 à 13, **caractérisé en ce que** les unités d'enregistrement d'images sont des caméras (13, 14) photosensibles avec enregistrement d'images électronique, en particulier des caméras à transfert de charge.

15. Dispositif selon la revendication 14, **caractérisé en ce que** des filtres adaptés à la longueur d'onde des éventails lumineux (11, 12), en particulier la longueur d'onde des rayons laser, sont montés en amont des caméras (13, 14).
